# EUROPEAN PATENT APPLICATION

(11) **EP 0 583 067 A2**
(43) Date of publication of application: **16.02.1994**
(21) Application number: 93305409.0
(22) Date of filing: 09.07.1993
(51) Int. Cl.: G06K 1/12, G06K 1/02

(54) **Device for producing marking means**

(30) Priority: 09.07.1992 GB 9214611
(71) Applicant: RETAINACAR LIMITED, London, SW18 1BH (GB)
(72) Inventor: Hart, Geoffrey Francis, London SW18 1BH (GB)
(74) Representative: Lyndon-Stanford, Edward Willoughby Brooke

(57) **Abstract**

In order to provide an automated and versatile device for producing stencils, the device 1 comprises punching wheels 15, 16 each for forming one symbol at a time, setting means 13, 14 for altering the symbol formed by the punching wheels, and control means for giving a signal to the setting means corresponding to a symbol to be formed, the control means having a memory for storing a sequence of symbols to be formed.

## Description

### Background of the Invention

This invention relates to a device for producing marking means. The device may especially be used for punching holes in material to make stencils, but it is of general applicability.

Marking means, which may include means such as maker's plates to be applied to an article or stencils for use in marking surfaces, have been produced for a long time by the use of stamps or punches with tool faces for forming the desired symbols.

These punches or stamps may be mounted in a machine having means for mounting material to be worked and for bringing the punches or stamps into contact with the material so that a symbol or line of symbols may be produced. The machine may be powered by hand or other sources of power, for example electricity.

It is common to group the punches or stamps together so that a number of symbols may be formed in a single punching action.

Such devices for producing marking means may comprise a fixed pattern of punches or stamps for forming a fixed pattern of symbols on the workpiece, or a variable pattern. In the latter case, various means are used to alter the pattern of punches applied; for example the punching surfaces may be mounted on the peripheries of a number of wheels which are set by hand to the desired position. The hand pattern setting step is a time consuming process and subject to a certain amount of error. Where random patterns of numbers are formed, the problem is much greater.

Means are available for producing labels bearing serial numbers, which will mechanically advance a number punched by the device by one, after each punching operation.

It is desired to provide a device for producing marking means which is fast, accurate and versatile, being capable of taking a wide variety of materials and forming a wide variety of patterns of digits. It is also preferred that the machine should be as small and compact as possible.

### The Invention

The present invention provides a device for and method of producing marking means as set out in Claim 1 or 7.

Preferred and/or optional features of the device are set forth in Claims 2 to 6, 8 and 9.

By providing control means for giving a signal to the setting means, an automated device may be produced in which the hand pattern setting step may be eliminated and the process of producing marking means accelerated.

The marking means produced may be means such as maker's plates for direct application to articles. The device may produce bar-code markers, for instance by perforating sheet-like material.

Alternatively, the marking means may comprise blanks or stencils for applying ink or solvent to the surfaces of articles, so that the articles may be marked. The solvent may be for marking glass, metal, plastic or other material.

The marking means may be used to mark office equipment, vehicles or parts of vehicles, domestic equipment, boats, caravans or even mobile telephones.

In the case of vehicles, the invention is particularly used to produce stencils for marking parts of vehicles during assembly. In the United Kingdom, each new vehicle is assigned a seventeen digit vehicle identification number (VIN). These may be applied to parts of the vehicle in assembly. For example, the VIN may be applied to the windscreens of vehicles during assembly.

The invention is particularly advantageous if the symbols to be formed comprise symbols of selectable shape.

The symbols may comprise numerals, letters, punctuation marks or other common symbols such as asterisks, mathematical symbols etc. The symbols may comprise parts of such symbols (for example a line of dots defining a part of such a symbol) or whole symbols, or an array of dots defining a whole symbol. The symbols may also comprise bars of different thickness, when a bar code is to be formed. Preferably, a sequence of symbols is formed, the sequence being formed by forming a plurality of parts of the sequence in succession. Preferably, the symbols are formed in a line in succession.

The means for forming at least one symbol in the material may be of the type for forming the symbol by working or deforming the surface of the material in some way. For example, the symbol forming means may be for punching, melting, grinding, machining, etching, stamping or embossing the surface of the material.

Preferably, the symbol forming means contacts the material. Preferably, an array of dots is punched out of the material.

The material may be any sheet-like material, such as paper or plastic or even thin metal sheet. The invention is particularly advantageous if the material is self adhesive vinyl on, eg., a paper backing.

Problems are often encountered in devices for punching self adhesive vinyl on paper backing, as adhesive may build up on the device and slow it down.

The apparatus may also slow down due to reductions in the power supply (for example a pressure drop in a hydraulic supply or a voltage drop in electricity supply). A particular embodiment of the present invention is aimed at solving the problem of the apparatus slowing down for example due to the accumulation of adhesive. Signal giving means may be provided to give signals to the control means to indicate when a part of the device has completed its function. The signal giving means may monitor the material feed step, the setting step, the symbol-forming step, or any other step.

The apparatus may comprise means for retaining the material in position with the symbol forming means, for example an array of punches, above the material.

The device may be set up to operate in a simple cycle, wherein material is fed to the device, the control means gives the signal to the symbol forming means, which forms the symbol in the material and gives a signal to the feed means so that the cycle is repeated.

The control means may have a memory for storing sequences of data representing sequences of symbols to be formed in the material. The control means may then be arranged to give the signal to the setting means by reading from the sequence of data. The control means may be programmed to give a further signal corresponding to at least one further symbol to be formed, by reading further from the sequence. The memory may be programmed with a plurality of sequences of symbols, each sequence being used to produce different marking means. The device can be programmed and then set up to automatically produce as many marking means as desired.

The control means may be programmed by any suitable means, including a keyboard, disk, bar code reader or connection to a larger computer system, for example the on-line factory system in a vehicle factory.

In order to form each symbol step by step, there may be means for giving a signal to the feed means before or after each respective symbol is formed, to feed the material.

According to a preferred embodiment of the invention, marking means of any length may be produced. The marking means is preferably produced by forming each symbol one after the other in succession, until the requsite number of symbols have been formed. However, the control means may comprise programmable means so that the number of symbols to be formed may be varied by varying the number of symbols stored in a memory.

The device may preferably also comprise a guillotine for cutting off chunks of material. If the material is provided in a continuous strip, marking means of varying length may be produced. Similarly, the marking means may be marked with sequences of symbols of various lengths, depending upon the information stored in the memory.

The symbol forming means may form substantially one symbol at a time. Then the machine is not limited to sequences of symbols of any given length, and can form substantially any pattern required, simply by being suitably programmed.

Preferably, the symbols are formed in rows, like text. A number of rows may be formed on a given piece of material, with different symbols in each row.

The rows may be formed simultaneously, which will require a plurality of symbol forming means operating simultaneously. However, each symbol of any given row is preferably formed in sequence. For example, two rows could be formed; the number of digits in each row need not be the same.

The device is particularly suitable for producing marking means carrying random or serial identification numbers or codes.

One marking means may be produced bearing each number, or several may be produced before progressing to the next number.

The device may be set up to operate quickly. For example, a marking means having a number comprising nine digits may be formed in around five seconds.

The apparatus of the present invention may be included in the production line in a vehicle or other factory. Marking means may then be produced in situ for the vehicle or product or for part of vehicle or product.

The invention will be further described by way of example only with reference to the accompanying drawings, in which:

### Brief Description of the Drawings

Figure 1 shows a front elevation of a device for producing marking means according to the invention,
Figure 2 is a side elevation of the device of Figure 1,
Figure 3 is a schematic illustration of the control means which may be used with the device of Figure 1, and
Figure 4 is a flow chart for the operation of the device of Figure 1.

### Detailed Description of the Drawings

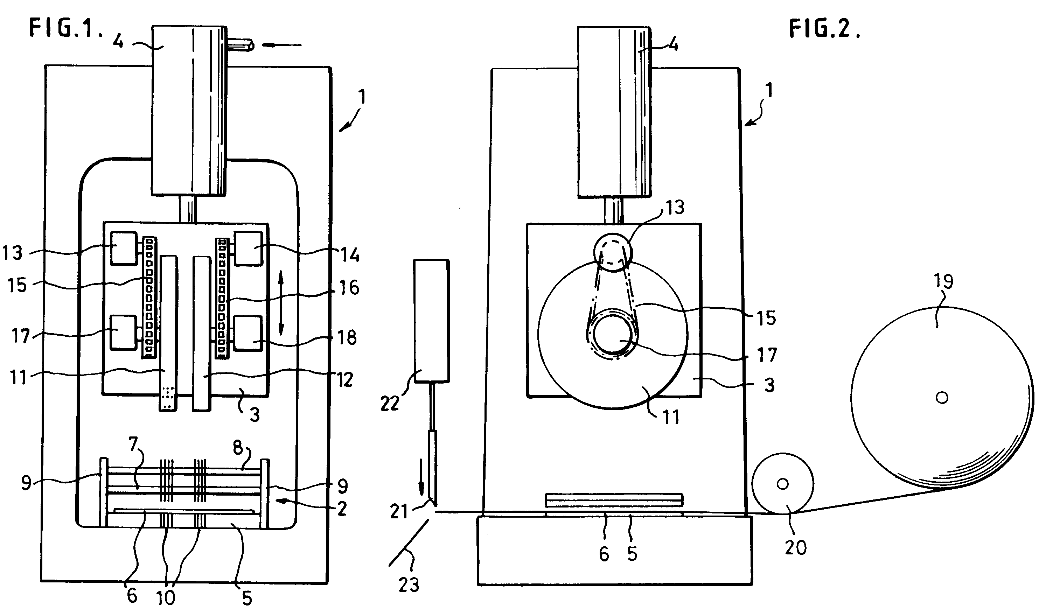

The device 1 for producing marking means according to the invention is shown in Figure 1 in front elevation, not to scale.

The device is designed to produce stencils having dot-matrix sequences of digits in them, but may be of general applicability.

The device comprises a part 2 for carrying the material, which in this case is self-adhesive vinyl sheet 100µm thick on a 67 gram per square meter glossy paper backing strip. There is a marking head 3 which is mounted for movement in the vertical plane, being powered by an air cylinder 4.

The part 2 comprises a die 5 on which the workpiece 6 sits whilst being worked, and press parts 7 and 8 which are mounted for vertical motion in guides 9.

The symbols are formed in the paper by a dot matrix system. The symbols are defined by a pattern of dots which are punched out of the paper. A set of free punches 10 defining a 6 x 5 grid are mounted in press part 8 so that a selected pattern of punches may be pressed through the workpiece 6, cooperating with holes in the die 5. Press part 7 comprises a retractor plate for removing the punches from the workpiece after punching.

In operation, the punches 10 are driven into contact with the material and continue straight through the material so that punched out scraps of paper are removed cleanly. The punched out scraps of paper may be collected in a tray (not illustrated) below the die 5.

The device shown is for forming two parallel rows of symbols simultaneously, one symbol per row at a time. The symbols in each row will normally be different. Marking head 3 comprises a pair of wheels 11 and 12, each for forming the symbols in a respective row. The marking head 3 is mounted for guided vertical motion in the device 1 so that the peripheries of wheels 11 and 12 may be brought into contact with the heads of the free punches 10 on the down stroke of the air cylinder 4. The peripheries of the wheels 11 and 12 comprise patterns of holes. When the wheels contact the heads of the free punches 10, no punch will be depressed where there is a hole on the wheel periphery. Accordingly, the pattern on the periphery of each wheel defines the negative space of the pattern of holes to be formed in the workpiece 6. The wheels 11 and 12 may be set up to form, for example, forty different symbols, having forty separate positions, nine degrees apart. The positions adopted by wheels 11 and 12 are carefully controlled by stepper motors 13 and 14 respectively, driving the wheels 11 and 12 through toothed belts 15 and 16 respectively. A position accuracy of about 0.3° may be required. Furthermore, wheel position sensing means in the form of feedback potentiometers are provided for giving a signal corresponding to the position of each wheel. The workpiece 6 is fed through the apparatus of Figure 1 in the direction into the plane of paper.

In Figure 2, the device of Figure 1 is shown in side elevation, not to scale. Working material is fed from a roll 19, from right to left through the device. The material preferably comprises paper or thin plastic.

The material may be supplied as a continuous homogenous strip or as individual labels gummed to a backing strip. A motor 20 is provided for feeding workpieces 6 from roll 19 onto the die 5. In the device of Figure 2, the completed workpieces are cut from the continuous strip by a guillotine 21 operated by air cylinder 22, the resulting pieces 23 being collected.

In order to automatically operate the device of Figures 1 and 2, a control system is required which will produce signals for:
1. signalling motor 20 to feed material to the die 5;
2. setting the wheels 11 and 12 via stepper motors 13 and 14;
3. operating air cylinder 4 to form a figure on the workpiece 6; and
4. operating guillotine 21 to separate the finished workpiece 23.

Furthermore, the device may be set up to provide signals to the control means for confirming the positions of the wheels 11 and 12, indicating when a punching stroke has been completed and indicating when feed has been completed.

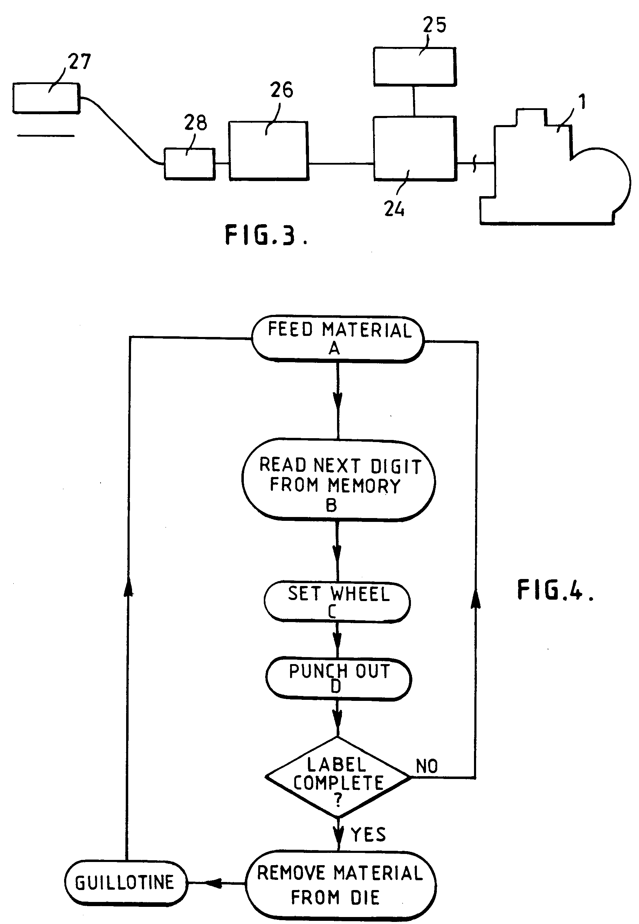

Figure 3 shows the control system for the machine 1.

The system comprises a controller 24 which has two control levels. The first control level produces signals 1, 2, 3 and 4 mentioned above for device 1. The first control level controls the device for the punching of a single character. The second control level interfaces with an external source of data and gives a signal to the first control level representative of the next character to be formed. The external source of data may comprise a keyboard 25 so that the machine may be controlled directly by the operator, providing semi-automatic or non-automatic operation when necessary. The external source of data may comprise a microprocessor system 26. The microprocessor system 26 may store signals input by keyboard 25. Alternatively, it may comprise a memory, for example in the form of a CDROM which may be loaded into the apparatus. The information may alternatively be input to the microprocessor system 26 by a bar code reader 27 controlled by reader controller 28. Alternatively, the source of external data may comprise an on-line factory computer system. The on-line system may input the information to the microprocessor directly, or in coded form. It may input the data to the microprocessor system 26 or into controller 24 directly.

Two sources of data may be used, the data from the sources may be compared, so that incorrect data may be detected.

In addition to providing signals for the first control level, the second control level monitors the operation on device 1.

The smooth operation of device 1 may be impeded by a number of factors. For example, where the power source comprises compressed air, there may be a drop in pressure leading to a slow punching or retracting of the marking head 3. Similarly, a drop in voltage may lead to the paper feed being slowed down. Alternatively, either the paper feed or the punching process or the retraction of the free punches from the material may be impeded by the accumulation of adhesives from the punched material. Accordingly, signal providing means (not shown) are provided for giving signals to the second control level of controller 24 to confirm that the device 1 has operated correctly. For example, there may be means to indicate that the paper has fed correctly, that the punching mechanism has retracted correctly, or that the free punches 10 have retracted correctly. Furthermore, the second control level may be provided with means for counting the number of characters formed, to determine if the marking means has been completed. In this case, it sends a signal to the material feed means and to the guillotine to cut off the completed material.

Figure 4 shows a flow chart for the operation of the device of Figure 1. The operation of the device of Figure 1 can be set up to follow a continous cycle. At the beginning of the cycle (step A), a workpiece 6 is fed onto die 5 by motor 20 so that specific parts of the workpiece 6 are in positions to be stamped by the free punches 10. When the material is in position, the second control level of the controller 24 reads the next digit to be formed in each row from the memory in the microprocessor 26 (step B). A signal is then given to the first control level. This in turn gives a signal to stepper motors 13 and 14 representing the symbols to be formed by the wheels 11 and 12. The setting is confirmed by the sensing means 17 and 18. When the wheels are set, a signal is given to a solenoid controlling fluid supply to the air cylinder 4 and the marking head 3 is driven down onto the punches 10 to form the symbols on the workpiece 6 (step D). This punching step may only take 100 ms. The air cylinder then retracts the marking head.

If the marking means is not complete, the motor 20 feeds the material a short distance on the die 5, so that the next symbol can be formed adjacent the previously formed symbols. Then the cycle of reading the next digit, setting the wheels and punching the symbol out of the workpiece are repeated cyclicly until all the required symbols have been formed in the workpiece. At this stage, the motor 20 removes the entire workpiece from the die 5, the workpiece being cut from the sheet of material or backing material by guillotine 21. When the workpiece has been guillotined, the next workpiece 6 can be fed to the die for punching and the cycle starts again.

The present invention has been described above purely by way of example, and modifications can be made within the invention.

## Claims

1. A device for producing marking means, comprising:
means for forming at least one symbol in a material;
setting means for altering the symbol formed by the symbol forming means; and
control means for giving a signal to the setting means, corresponding to a symbol to be formed.

2. The device of Claim 1, wherein the control means is programmed to give to the setting means a further signal corresponding to at least one further symbol to be formed after the first mentioned symbol is formed.

3. The device of Claim 1 or 2, further comprising material feed means and means for giving a feed signal to the feed means for feeding the material to the symbol forming means.

4. The device of any of the preceding claims, wherein the symbol forming means comprises a rotatable member having a plurality of parts at different angular positions thereon, each part being for determining a symbol to be formed, the setting means being for altering the symbol formed by rotating the rotatable member.

5. The device of any of the preceding Claims, wherein the symbol forming means comprises at least one wheel having a plurality of symbol determining parts on the periphery thereof.

6. The device of Claim 5, wherein the symbol determining parts each comprise a surface having holes formed therein, the symbol forming means further comprising means for bringing the symbol determining parts into contact with punch members, so that the punch members may be driven into contact with the material, and so that where there are holes in the surface, no punching member is driven.

7. A method of producing marking means, by forming symbols in material using symbol forming means, there being setting means for altering the symbol formed by the symbol forming means, the method comprising:
giving a signal to the setting means representative of the symbol to be formed;
setting the symbol forming means; and
forming the symbol.

8. The method of Claim 7, wherein the symbol forming means comprises a rotatable member having a plurality of parts at different angular positions thereon, each part being for determining a symbol to be formed, the symbol forming means being set by rotating the rotatable member.

9. The method of Claim 7 or 8, further comprising the steps of:
feeding the material after a symbol has been formed;
giving a further signal to the setting means, representative of a further symbol to be formed;
setting the symbol forming means; and
forming a further symbol in the material.
